# EUROPÄISCHE PATENTSCHRIFT

(11) **EP 3 241 801 B1**
(45) Veröffentlichungstag und Bekanntmachung des Hinweises auf die Patenterteilung: **01.04.2020**
(21) Anmeldenummer: 17169359.1
(22) Anmeldetag: 04.05.2017
(51) Int. Cl.: B66F 17/00, G01S 15/93, G01S 17/93, B60T 7/22, G01S 7/48, G01S 7/53, G01S 13/93

(54) **VERFAHREN ZUR KOLLISIONSÜBERWACHUNG BEI EINEM FLURFÖRDERZEUG**
METHOD FOR COLLISION MONITORING IN AN INDUSTRIAL TRUCK
PROCÉDÉ DE SURVEILLANCE DE COLLISION DANS UN CHARIOT DE MANUTENTION

(30) Priorität: 06.05.2016 DE 102016108392
(43) Veröffentlichungstag der Anmeldung: 08.11.2017
(73) Patentinhaber: Linde Material Handling GmbH, 63743 Aschaffenburg (DE)
(72) Erfinder: SCHMIDT, Alexander, 63762 Grossostheim (DE); REINHARDT, Tobias, 64287 Darmstadt (DE); KRUMBHOLZ, Peter, 63869 Jakobsthal (DE)
(74) Vertreter: Patentship Patentanwaltsgesellschaft mbH

(56) Entgegenhaltungen:
- EP-B1- 0 800 129
- DE-A1-102008 008 922
- US-A1- 2010 289 662

## Beschreibung

Die Erfindung betrifft ein Verfahren zur Kollisionsüberwachung bei einem Flurförderzeug. Insbesondere betrifft die Erfindung ein Verfahren zur Kollisionsüberwachung bei einem Flurförderzeug mit Sensormitteln zur Erfassung eines Umgebungsbereiches, mit Fahrgeschwindigkeitserfassungsmitteln und mit einer Steuerung, die aus einem Signal der Sensormittel ein Hindernis erfassen und einen Abstand des Hindernisses gegenüber dem Flurförderzeug bestimmen kann, wobei durch die Steuerung ein Kollisionsgefahrmodus festgestellt wird, in dem ein Warnsignal und/oder ein Eingriff in Fahrzeugfunktionen erfolgt, insbesondere eine Abbremsung der Fahrgeschwindigkeit des Flurförderzeugs.

Im Stand der Technik sind Flurförderzeuge mit Sensoren bekannt, die das Umfeld des Flurförderzeugs überwachen und auswerten, um Kollisionen zu vermeiden. Dies trifft insbesondere auf in Lagerbereichen betriebene Flurförderzeuge oder vollautomatisch, autonom betriebene Flurförderzeuge zu. Häufige Ausführungsformen solcher Flurförderzeuge sind Schubmaststapler, Regalbediengeräte und Gabelhubwagen. Hierfür werden Sensoren eingesetzt, die laufzeitmessende Systeme sind, wie Ultraschall-, Radar- oder Lasersensoren. Ebenso sind auch Bildverarbeitungssysteme bekannt, die aus einem Kamerabild oder einem Stereokamerabild die Umgebung erfassen.

Insbesondere bei autonom fahrenden Flurförderzeugen ist es bekannt, Systeme einzusetzen, die mithilfe solcher Sensoren direkt in das Fahrverhalten des Flurförderzeugs eingreifen. Dies erfolgt beispielsweise, indem eine Abbremsung des Flurförderzeugs erfolgt, um eine Kollision zu verhindern. Solche Systeme sind auch als Assistenzsysteme bekannt bei Flurförderzeugen, die von einem Fahrer geführt werden.

Bei durch einen Fahrer geführten Flurförderzeugen ist es dabei bekannt, das Flurförderzeug nicht zwangsweise bis zum Stillstand abzubremsen sondern nur auf eine sehr niedrige Geschwindigkeit, bei der eine Kollision nicht mehr zu Beschädigungen führt, beispielsweise 0,5 km/h. Dadurch wird verhindert, dass beispielsweise bei einer ungünstigen Erfassung der Umgebung eine Palette gar nicht aufgenommen werden könnte, da fehlerhaft eine Kollision durch das System vermutet und das Flurförderzeug blockiert wird.

Es ist allgemein ein Nachteil bei solchen Systemen, dass es zu Eingriffen in Situationen kommt, die aus der Sicht eines menschlichen Fahrers keinen Eingriff erfordern. So werden Teile des Chassis von Gabelstaplern oder Schubmaststaplern wie auch Lagertechnikgeräten oftmals dafür genutzt, um Gegenstände oder Ladungsträger, beispielsweise eine Palette oder eine Gitterbox zu verschieben oder zu drehen, ohne die Gegenstände oder Ladungsträger auf einer Lastaufnahmevorrichtung aufzunehmen, auch wenn dies offiziellen Richtlinien zur Verwendung widerspricht.

Dabei kommen alle Teile bzw. Bereiche des Außenumfangs des Flurförderzeugs zum Einsatz, insbesondere aber Teile der Anbaugeräte oder der Lastaufnahmemittel, wie etwa eine Lastgabel. Bei Gegengewichtsgabelstaplern wird oft das massive und robuste Gegengewicht hierfür eingesetzt und in Rückwärtsfahrt eine Palette oder eine Gitterbox verschoben.

Weiterhin kann es im Bereich der Lastaufnahmemittel beim Mitführen eines sehr breiten Ladungsträgers zu einer fehlerhaften Erfassung eines Hindernisses durch solche Sensoren kommen, die für gewöhnlich nach dem Stand der Technik so ausgerichtet sind, dass sie den eigentlichen Bereich auf dem Lastaufnahmemittel bei einer normal aufgenommenen Palette nicht erfassen. Wenn aber beispielsweise eine Palette quer aufgenommen wird und als sogenannte Querpalette transportiert wird, kann es zu einer fehlerhaften Erfassung eines Hindernisses kommen. Dieses Problem tritt vor allem bei Schubmaststaplern auf, die sehr schmal gebaut sind, wenn diese in Richtung der Zinken einer Lastgabel ausgerichtete Sensoren aufweisen, die seitlich an der Lastgabel vorbei nach vorne orientiert die Umgebung erfassen. Die Akzeptanz solcher Assistenzsysteme wird dann dadurch bei den Fahrern verringert, dass es zu einer andauernden Warnung und/oder zur Eingriffen in das Fahrverhalten des Flurförderzeugs aus Sicherheitsgründen kommen kann, wie etwa eine andauernde Reduzierung der Fahrgeschwindigkeit auf Schleichfahrt.

Nachteilig ist an diesem Stand der Technik auch, dass nicht der gesamte Bereich vor dem Flurförderzeug überwacht werden kann, sich durch die zuvor geschilderten Probleme die Umschlagsleistung reduzieren und es schließlich auch durch Abdeckung einzelner Sensoren, beispielsweise durch Verschmutzung, zu den genannten fehlerhaften Beschränkungen der Fahrgeschwindigkeit oder einem Warnsignal kommen kann.

Es ist besonders wünschenswert gerade den Bereich direkt vor einem Flurförderzeug, in dem sich jedoch auch die Lastaufnahmemittel oder Anbaugeräte befinden, auf Kollisionen zu überwachen, da gerade hier die größte Gefahr einer Kollision besteht. Dabei ist eine Überwachung auf Kollisionen ringsum um das Flurförderzeug sinnvoll und der erfasste Bereich befindet sich im Regelfall nahe am Boden.

Aus der DE 10 2008 008 922 A1 ist ein Schubmaststapler bekannt, der einen Überwachungssensor zur Erfassung von Hindernissen und Vermeidung von Kollisionen am vorderen Ende eines Radarms aufweist.

Aus der EP 0 800 129 B1 ist ein Flurförderzeug mit Mitteln zur Erfassung der Position und Ausrichtung eines Transportgutes sowie zur Erfassung von Hindernissen bekannt, wobei das Flurförderzeug Mittel zum Abbremsen des Flurförderzeugs im Fall der Erkennung von Hindernissen aufweist.

In der US 2010/289662 A1 ist ein System gemäß dem Oberbegriff des Anspruchs 1 offenbart, bei dem Personen im Umfeld eines Flurförderzeugs mittels RFID-Transponder, die von der Person getragen werden, von dem Flurförderzeug erkannt und das Flurförderzeug derart in den Funktionen beschränkt wird, dass eine Kollision mit der Person im Umfeld verhindert wird.

Der vorliegenden Erfindung liegt daher die Aufgabe zugrunde, ein Verfahren zur Kollisionsüberwachung bei einem Flurförderzeug zur Verfügung zu stellen, das die oben genannten Nachteile vermeidet und das genauer, sowie weniger fehleranfällig wirkliche Gefahrensituationen von Situationen unterscheidet, in denen kein Eingriff erforderlich ist.

Diese Aufgabe wird durch ein Verfahren zur Kollisionsüberwachung bei einem Flurförderzeug mit den Merkmalen des unabhängigen Patentanspruchs 1 gelöst. Vorteilhafte Weiterbildungen der Erfindung sind in den Unteransprüchen angegeben.

Die Aufgabe wird gelöst durch ein Verfahren zur Kollisionsüberwachung bei einem Flurförderzeug mit Sensormitteln zur Erfassung eines Umgebungsbereiches, mit Fahrgeschwindigkeitserfassungsmitteln und mit einer Steuerung, die aus einem Signal der Sensormittel ein Hindernis erfassen und einen Abstand des Hindernisses gegenüber dem Flurförderzeug bestimmen kann, wobei durch die Steuerung ein Kollisionsgefahrmodus festgestellt wird, in dem ein Warnsignal und/oder ein Eingriff in Fahrzeugfunktionen erfolgt, insbesondere eine Abbremsung der Fahrgeschwindigkeit des Flurförderzeugs, die Steuerung aus dem Abstand eine Relativgeschwindigkeit des Hindernisses gegenüber dem Flurförderzeug bestimmt sowie die Relativgeschwindigkeit mit einer Fahrgeschwindigkeit des Flurförderzeugs aus den Fahrgeschwindigkeitserfassungsmitteln in Richtung des Hindernisses vergleicht und, wenn die Relativgeschwindigkeit kleiner ist als die Fahrgeschwindigkeit des Flurförderzeugs in Richtung auf das Hindernis zu und die Relativgeschwindigkeit zwischen Flurförderzeug und Hindernis null ist, in einen Sondermodus umschaltet, in dem ein Warnsignal und/oder Eingriff in Fahrzeugfunktionen nicht erfolgt.

Vorteilhaft wird das Flurförderzeug ab dem Zeitpunkt, in dem festgestellt wird, dass die Relativgeschwindigkeit zwischen Flurförderzeug und Hindernis, eventuell unter Berücksichtigung von Toleranzwerten, auf den Wert null gefallen ist, in den Sondermodus umgeschaltet und es ergeben sich keine Einschränkungen der Funktionsfähigkeit des Flurförderzeugs. Dadurch wird es möglich, beispielsweise eine Palette quer auf einem Lastaufnahmemittel aufzunehmen, die in der Position auf dem Lastaufnahmemittel in den Erfassungsbereich eines Sensors ragt. Zwar kommt es eventuell dazu, dass die Fahrbewegung des Flurförderzeugs beim eigentlichen Aufnehmen der Last eingeschränkt wird, beispielsweise die letzten Zentimeter nur in Schleichfahrt erfolgen können. Sobald jedoch in den Sondermodus umgeschaltet wird, ist das Flurförderzeug nicht beeinträchtigt und kann wieder mit voller Funktionsfähigkeit bewegt werden. Dadurch ergibt sich eine Erhöhung der Umschlagsleistung. Das Verfahren kann auch durch Software umgesetzt werden. Dabei ist es möglich, eine eigene Steuerung für die Kollisionsüberwachung vorzusehen, oder diese Steuerung in eine allgemeine Fahrzeugsteuerung zu integrieren. Insbesondere stehen aus internen Bussystemen der Fahrzeugsteuerung, beispielsweise einem Can-Bus, Informationen wie die Fahrgeschwindigkeit häufig bereits zur Verfügung. Dadurch kann das Verfahren rein softwaremäßig und ohne großen Aufwand umgesetzt werden. Die Akzeptanz eines entsprechenden Assistenzsystems bei den Fahrern wird erhöht und es können auch Bereiche rund um das Flurförderzeug, die häufig zum Schieben von Gegenständen am Boden eingesetzt werden, überwacht werden.

In einer vorteilhaften Ausgestaltung des Verfahrens wird sichergestellt, dass die Fahrgeschwindigkeit größer ist als null.

Durch eine Überprüfung, ob die Fahrgeschwindigkeit des Flurförderzeugs größer ist als null, kann sichergestellt werden, dass keine fehlerhafte Umschaltung erfolgt. Wenn die Fahrgeschwindigkeit nahe null ist oder auf null abfällt, ist auch die Relativgeschwindigkeit zwischen Flurförderzeug und Hindernis zumindest im Rahmen eines Toleranzbereiches null und es kann zu einer fehlerhaften Umschaltung in den Sondermodus kommen, obwohl kein Gegenstand geschoben wird oder auch keine in den Erfassungsbereich der Sensoren ragende Last aufgenommen wurde.

Die Fahrgeschwindigkeit kann mit einem Sicherheitsfaktor multipliziert werden.

Vorteilhaft wird die Relativgeschwindigkeit nur als kleiner bewertet, wenn sie die Fahrgeschwindigkeit um einen Toleranzwert unterschreitet.

In einer Ausgestaltung des Verfahrens ist die Fahrgeschwindigkeit in Richtung auf das Hindernis die auf eine Verbindungslinie zwischen Sensormitteln und Hindernis projizierte Geschwindigkeitskomponente.

Das Flurförderzeug wird nicht immer direkt in Richtung auf das Hindernis fahren. Die aus dem Sensorsignal erfasste Relativgeschwindigkeit des Hindernisses in Bezug auf das Flurförderzeug bezieht sich jedoch auf die direkte Verbindungslinie. Wenn daher eine virtuelle Komponente der Fahrgeschwindigkeit des Flurförderzeugs in Bezug auf diese Verbindungslinie bestimmt wird, ergibt sich eine größere Genauigkeit des beschriebenen Verfahrens.

Vorteilhaft bestehen die Sensormittel aus einem Ultraschallsensor und/oder Radarsensor und/oder Laserscanner und/oder einer Time-of-Flight Kamera und/oder induktiven Sensoren.

Solche Sensoren sind bei Kollisionsüberwachungssystem, aber auch für sonstige Assistenzsysteme, oder für das teil- oder vollständig autonome Fahren des Flurförderzeugs oftmals bereits vorhanden. Vorteilhaft kann das Verfahren daher allein durch eine softwaremäßige Anpassung umgesetzt werden. Auch entsprechende Auswertungsverfahren zur Erkennung von Hindernissen wie auch des Abstands dieser Hindernisse sind im Stand der Technik bekannt.

Das Flurförderzeug kann ein Schubmaststapler sein und die Sensormittel können den einem Lastaufnahmemittel zugewandten Bereich erfassen, insbesondere den Bereich vor und über dem Lastaufnahmemittel.

Schubmaststapler sind oft sehr schmal gebaut, und wenn diese in Richtung der Zinken einer Lastgabel ausgerichtete Sensoren aufweisen, die seitlich an Lastaufnahmemittel vorbei nach vorne orientiert die Umgebung erfassen, kann es leicht dazu kommen, dass eine aufgenommenen Last in den Erfassungsbereich ragt und fälschlich als sehr nahes und daher gefährliches Hindernis erfasst wird. Gemäß den beschriebenen Verfahren wird in einem solchen Fall in den Sondermodus umgeschaltet und es kommt nicht zu Einschränkungen der Funktionsfähigkeit des Flurförderzeugs. Bei Schubmaststaplern ist "vorwärts" im Regelfall in Richtung der dem Lastaufnahmemittel abgewandten Seite zu verstehen, da diese bei Transportfahrten mit einem Lastaufnahmemittel nach hinten orientiert fahren. Beim Aufnehmen oder Absetzen einer Last wird jedoch der Schubmaststapler mit dem Lastaufnahmemittel bzw. einer Lastgabel voraus bewegt und somit ist es sinnvoll, durch die Sensormittel den dem Lastaufnahmemittel zugewandten Bereich zu erfassen.

In einer günstigen Ausgestaltung sind die Sensormittel an einem oder beiden Radarmen des Schubmaststaplers angeordnet.

Durch eine Anordnung am vorderen Ende der Radarme des Schubmaststaplers als alleinige Sensoren oder zusätzlich zu anderen Sensoren kann der für Kollisionen besonders kritische Bereich vor dem Lastaufnahmemittel besonders gut erfasst werden. Dabei können die Sensoren so ausgerichtet werden, dass das vordere Ende einer Lastgabel des Lastaufnahmemittels zumindest in einer zurückgezogenen Position des Schubmastes nicht in den Erfassungsbereich gerät. Wenn dann eine Last quer aufgenommen wird in Form einer Querpalette, oder wenn mit den Radarmen eine Last am Boden verschoben wird, kann dies vorteilhaft durch das beschriebene Verfahren in dem Sondermodus erfolgen, indem die Fahrfunktionen nicht eingeschränkt sind und es auch nicht zu einem störenden Warnsignal kommt.

Die Sensormittel können einen bodennahen Bereich erfassen.

Umgebungssensoren für die Überwachung auf Kollisionen bzw. die Auswertung von Signalen von Umgebungssensoren, die auch höhere Bereiche der Umgebung erfassen, werden im Regelfall auf einen bodennahen Bereich ausgerichtet.

Das Flurförderzeug kann an einem Hubmast höhenbeweglich geführte Lastaufnahmemittel aufweisen und durch die Steuerung eine Umschaltung in den Sondermodus nur erfolgen, wenn durch Hubhöhenerfassungsmittel, insbesondere einen Hubhöhensensor, die Steuerung eine Position der Lastaufnahmemittel in dem bodennahen Erfassungsbereich der Sensormittel festgestellt wird.

In dem Fall, in dem eine auf dem Lastaufnahmemittel aufgenommene Last in einer größeren Höhe sich befindet, wird dann nicht in den Sondermodus umgeschaltet. Dadurch wird sichergestellt, dass in einem solchen Betriebszustand die Kollisionsüberwachung Hindernisse erfasst. Das Umschalten in den Sondermodus hängt hier zusätzlich von der Hubhöhe der Lastaufnahmemittel ab. In dieser Ausführungsform ist nach dem Verfahren auch nicht das Schieben von Gegenständen am Boden vorgesehen. Ein die Hubhöhe wiedergebendes Signal steht häufig bereits aus einer Fahrzeugsteuerung, etwa über ein Bussystem, zur Verfügung. Daher kann auch diese zusätzliche Bedingung häufig sehr einfach umgesetzt werden.

Grundsätzlich ist es denkbar, das zuvor beschriebene Verfahren mit allen seinen Ausführungsvarianten bei jeglichen Gattungen von Fahrzeugen anzuwenden, insbesondere auch mobilen Arbeitsmaschinen.

Weitere Vorteile und Einzelheiten der Erfindung werden anhand der in den schematischen Figuren dargestellten Ausführungsbeispiele näher erläutert. Hierbei zeigt
- Fig. 1: ein Flurförderzeug in Aufsicht, bei dem das erfindungsgemäße Verfahren zum Einsatz kommt,
- Fig. 2: schematisch das Flurförderzeug der Fig. 1 in Seitenansicht und
- Fig. 3: schematisch ein Funktionsschema des erfindungsgemäßen Verfahrens.

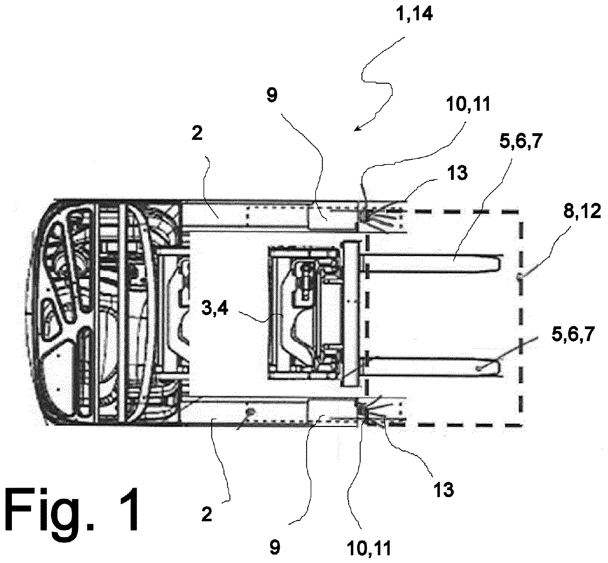

Die Fig. 1 zeigt ein Flurförderzeug 1 in Aufsicht, bei dem das erfindungsgemäße Verfahren zum Einsatz kommt. Bei dem Flurförderzeug 1 handelt es sich um einen Schubmaststapler 14 mit zwei Radarmen 2 und einem hier in einer vorgeschobenen Position dargestellten Hubmast 3 in Form eines Schubmastes 4, an dem ein Lastaufnahmemittel 5 in Form einer Lastgabel 6 mit Gabelzinken 7 höhenbeweglich geführt ist. Auf den Gabelzinken 7 liegt eine Palette 8 mit einer Last 12 querorientiert auf.

An den vorderen Enden der Radarme 2 sind Stützräder 9 der Radarme 2 angeordnet und vor diesen Sensormittel 10 zur Erfassung der Umgebung, hier beispielsweise Ultraschallsensoren 11, wobei jedoch auch jegliche andere Art von Sensoren zum Einsatz kommen kann.

Die Ultraschallsensoen 11 erfassen ein vor dem Lastaufnahmemittel 5 bei einer Fahrt in Richtung mit dem Lastaufnahmemittel 5 voraus sich befindliches Hindernis. Die quer orientierte Palette 8 mit der Last 12 ragt dabei in einen Erfassungsbereich 13 der Ultraschallsensoren 11 hinein. Da jedoch die Relativgeschwindigkeit der Last 12 gegenüber dem Flurförderzeug 1, das sich mit einer positiven Fahrgeschwindigkeit in der Darstellung nach rechts bewegt, null ist, schaltet eine Steuerung in den Sondermodus und es erfolgt kein Eingriff in die Funktionen des Flurförderzeugs 1, insbesondere keine Beschränkungen der Fahrgeschwindigkeit. Vorteilhaft kann daher das Flurförderzeug 1 auch mit einer quer orientierten Palette 8 mit entsprechender Last 12 mit derselben Umschlagsleistung bewegt werden.

Ebenso ist es möglich, nach einem langsamen Heranfahren eine am Boden stehende Palette mit dem vorderen Ende eines Radarms 2 zu verschieben oder zu drehen, da ab dem Zeitpunkt der Berührung der am Boden stehenden Palette die Relativgeschwindigkeit zwischen dem Flurförderzeug 1 und dieser null wird und in den Sondermodus umgeschaltet wird.

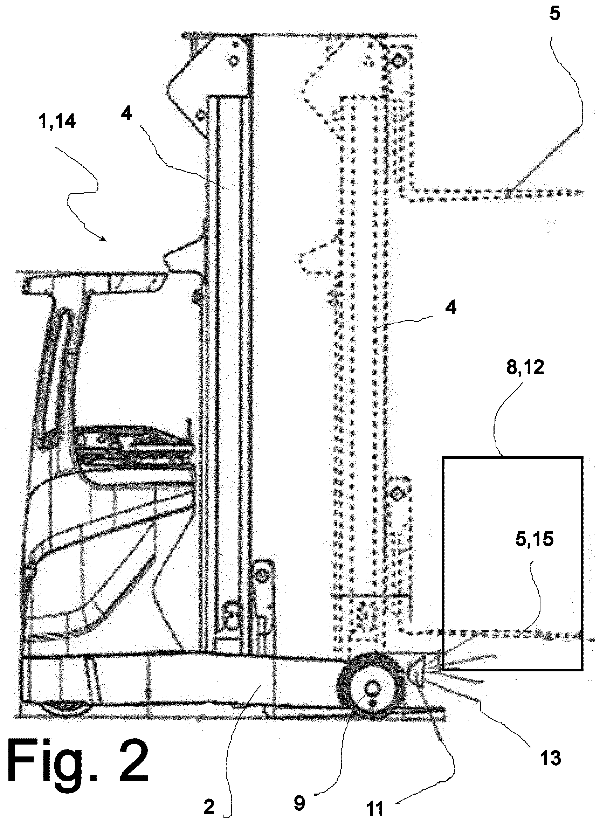

Die Fig. 2 zeigt schematisch das Flurförderzeug 1 der Fig. 1 in Seitenansicht. Der Schubmaststapler 14 ist hier mit dem Schubmast 4 in der zurückgezogenen Stellung dargestellt. Daneben ist in einer gestrichelten Darstellung die vorgeschobene Position des Schubmastes 4 dargestellt. Die Palette 8 mit der Last 12 ist hier mit dem Lastaufnahmemittel 5 in einer unteren Position 15 dargestellt, in der die Last 12 in den Erfassungsbereich 13 des Ultraschallsensors 11 hineinragt, der vor dem Stützrad 9 an dem Radarm 2 angeordnet ist. Alternativ kann das Lastaufnahmemittel 5 sich auch in der ebenfalls dargestellten oberen Position befinden. Durch eine zusätzliche Überprüfung der Steuerung wird der Sondermodus nur eingeschaltet, wenn sich das Lastaufnahmemittel 5 in der unteren Position befindet. Dadurch bleibt die Funktion der Kollisionsüberwachung bei einer oberen Position des Lastaufnahmemittels 5 in vollem Ausmaße erhalten.

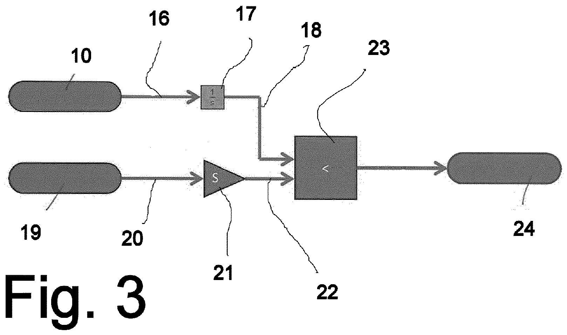

Die Fig. 3 zeigt schematisch ein Funktionsschema des erfindungsgemäßen Verfahrens. Von den Sensormitteln 10 wird ein Abstand 16 einem Differentiator 17 zugeleitet, durch den eine Relativgeschwindigkeit 18 eines Hindernisses bestimmt wird. Aus einer Fahrzeugsteuerung 19 wird eine Fahrgeschwindigkeit 20 mit einem Sicherheitswert 21 multipliziert und als Vergleichsfahrgeschwindigkeit 22 einen Komperator 23 zugeführt. Durch diesen wird bestimmt, ob in einen Sondermodus 24 umgeschaltet wird, wenn bei einer positiven Vergleichsfahrgeschwindigkeit 22 die Relativgeschwindigkeit 18 null wird.

## Patentansprüche

1. Verfahren zur Kollisionsüberwachung bei einem Flurförderzeug (1) mit Sensormitteln (10) zur Erfassung eines Umgebungsbereiches, mit Fahrgeschwindigkeitserfassungsmitteln und mit einer Steuerung, die aus einem Signal der Sensormittel (10) ein Hindernis erfassen und einen Abstand (16) des Hindernisses gegenüber dem Flurförderzeug (1) bestimmen kann, wobei durch die Steuerung ein Kollisionsgefahrmodus festgestellt wird, in dem ein Warnsignal und/oder ein Eingriff in Fahrzeugfunktionen erfolgt, insbesondere eine Abbremsung der Fahrgeschwindigkeit des Flurförderzeugs (1),
**dadurch gekennzeichnet,**
**dass** die Steuerung aus dem Abstand (16) eine Relativgeschwindigkeit (18) des Hindernisses gegenüber dem Flurförderzeug (1) bestimmt sowie die Relativgeschwindigkeit (18) mit einer Fahrgeschwindigkeit (20) des Flurförderzeugs (1) aus den Fahrgeschwindigkeitserfassungsmitteln (19) in Richtung des Hindernisses vergleicht und, wenn die Relativgeschwindigkeit (18) kleiner ist als die Fahrgeschwindigkeit (20) des Flurförderzeugs (1) in Richtung auf das Hindernis zu und die Relativgeschwindigkeit (18) zwischen Flurförderzeug (1) und Hindernis null ist, in einen Sondermodus (24) umschaltet, in dem ein Warnsignal und/oder Eingriff in Fahrzeugfunktionen nicht erfolgt.

2. Verfahren nach Anspruch 1,
**dadurch gekennzeichnet,**
**dass** die Fahrgeschwindigkeit (20) größer ist als null.

3. Verfahren nach Anspruch 1 oder 2,
**dadurch gekennzeichnet,**
**dass** die Fahrgeschwindigkeit (20) mit einem Sicherheitsfaktor multipliziert wird.

4. Verfahren nach einem der Ansprüche 1 bis 3,
**dadurch gekennzeichnet,**
**dass** die Relativgeschwindigkeit (18) nur als kleiner bewertet wird, wenn sie die Fahrgeschwindigkeit (20) um einen Toleranzwert unterschreitet.

5. Verfahren nach einem der Ansprüche 1 bis 4,
**dadurch gekennzeichnet,**
**dass** die Fahrgeschwindigkeit (20) in Richtung auf das Hindernis die auf eine Verbindungslinie zwischen Sensormitteln (10) und Hindernis projizierte Geschwindigkeitskomponente ist.

6. Verfahren nach einem der Ansprüche 1 bis 5,
**dadurch gekennzeichnet,**
**dass** die Sensormittel (10) aus einem Ultraschallsensor (11) und/oder Radarsensor und/oder Laserscanner und/oder einer Time-of-Flight Kamera und/oder induktiven Sensoren bestehen.

7. Verfahren nach einem der Ansprüche 1 bis 6,
**dadurch gekennzeichnet,**
**dass** das Flurförderzeug (1) ein Schubmaststapler (14) ist und die Sensormittel (10) den einem Lastaufnahmemittel (5) zugewandten Bereich erfassen, insbesondere den Bereich vor und über dem Lastaufnahmemittel (5).

8. Verfahren nach Anspruch 7,
**dadurch gekennzeichnet,**
**dass** die Sensormittel (10) an einem oder beiden Radarmen (2) des Schubmaststaplers (14) angeordnet sind.

9. Verfahren nach einem der Ansprüche 1 bis 6,
**dadurch gekennzeichnet,**
**dass** die Sensormittel (10) einen bodennahen Bereich erfassen.

10. Verfahren nach Anspruch 9,
**dadurch gekennzeichnet,**
**dass** das Flurförderzeug an einem Hubmast (3) höhenbeweglich geführte Lastaufnahmemittel (5) aufweist und durch die Steuerung eine Umschaltung in den Sondermodus (24) nur erfolgt, wenn durch Hubhöhenerfassungsmittel, insbesondere einen Hubhöhensensor, die Steuerung eine Position der Lastaufnahmemittel (5) in dem bodennahen Erfassungsbereich der Sensormittel (10) festgestellt wird.

## Claims

1. Method for monitoring for collisions in an industrial truck (1) having sensor means (10) for capturing a surrounding area, having driving speed capture means and having a controller which can capture an obstacle from a signal from the sensor means (10) and can determine a distance (16) between the obstacle and the industrial truck (1), wherein the controller determines a collision risk mode in which a warning signal and/or intervention in vehicle functions is/are effected, in particular a deceleration of the driving speed of the industrial truck (1),
**characterized**
**in that** the controller uses the distance (16) to determine a relative speed (18) of the obstacle with respect to the industrial truck (1) and compares the relative speed (18) with a driving speed (20) of the industrial truck (1) from the driving speed capture means (19) in the direction of the obstacle, and, if the relative speed (18) is less than the driving speed (20) of the industrial truck (1) in the direction of the obstacle and the relative speed (18) between the industrial truck (1) and the obstacle is zero, changes over to a special mode (24) in which a warning signal and/or intervention in vehicle functions is/are not effected.

2. Method according to Claim 1,
**characterized**
**in that** the driving speed (20) is greater than zero.

3. Method according to Claim 1 or 2,
**characterized**
**in that** the driving speed (20) is multiplied by a safety factor.

4. Method according to one of Claims 1 to 3,
**characterized**
**in that** the relative speed (18) is only assessed to be less if it undershoots the driving speed (20) by a tolerance value.

5. Method according to one of Claims 1 to 4,
**characterized**
**in that** the driving speed (20) in the direction of the obstacle is the speed component projected onto a connecting line between the sensor means (10) and the obstacle.

6. Method according to one of Claims 1 to 5,
**characterized**
**in that** the sensor means (10) consist of an ultrasonic sensor (11) and/or a radar sensor and/or a laser scanner and/or a time-of-flight camera and/or inductive sensors.

7. Method according to one of Claims 1 to 6,
**characterized**
**in that** the industrial truck (1) is a reach truck (14) and the sensor means (10) capture the area facing a load handling means (5), in particular the area in front of and above the load handling means (5).

8. Method according to Claim 7,
**characterized**
**in that** the sensor means (10) are arranged on one or both wheel arms (2) of the reach truck (14).

9. Method according to one of Claims 1 to 6,
**characterized**
**in that** the sensor means (10) capture an area close to the ground.

10. Method according to Claim 9,
**characterized**
**in that** the industrial truck has load handling means (5) guided in a height-adjustable manner on a lifting mast (3), and the controller changes over to the special mode (24) only if the controller determines a position of the load handling means (5) in the capture area of the sensor means (10) which is close to the ground by means of lifting height capture means, in particular a lifting height sensor.

## Revendications

1. Procédé de surveillance de collision au niveau d'un chariot de manutention (1) comprenant des moyens de détection (10) destinés à détecter une zone environnante, comprenant des moyens d'acquisition de vitesse de déplacement et comprenant une commande qui, à partir d'un signal des moyens de détection (10), peut détecter un obstacle et déterminer une distance (16) de l'obstacle par rapport au chariot de manutention (1), un mode de danger de collision étant constaté par la commande, dans lequel un signal d'alerte et/ou une intervention dans des fonctions du chariot ont lieu, notamment une réduction par freinage de la vitesse de déplacement du chariot de manutention (1),
**caractérisé en ce**
**que** la commande détermine, à partir de la distance (16), une vitesse relative (18) de l'obstacle par rapport au chariot de manutention (1) et aussi compare la vitesse relative (18) avec une vitesse de déplacement (20) du chariot de manutention (1) issue des moyens d'acquisition de vitesse de déplacement (19) en direction de l'obstacle et, lorsque la vitesse relative (18) est inférieure à la vitesse de déplacement (20) du chariot de manutention (1) en direction de l'obstacle et la vitesse relative (18) entre le chariot de manutention (1) et l'obstacle est nulle, bascule dans un mode spécial (24) dans lequel un signal d'alerte et/ou une intervention dans des fonctions du chariot n'ont pas lieu.

2. Procédé selon la revendication 1, **caractérisé en ce que** la vitesse de déplacement (20) est supérieure à zéro.

3. Procédé selon la revendication 1 ou 2, **caractérisé en ce que** la vitesse de déplacement (20) est multipliée par un facteur de sécurité.

4. Procédé selon l'une des revendications 1 à 3,
**caractérisé en ce que** la vitesse relative (18) n'est évaluée plus faible que lorsqu'elle devient inférieure à la vitesse de déplacement (20) d'une valeur de tolérance.

5. Procédé selon l'une des revendications 1 à 4,
**caractérisé en ce que** la vitesse de déplacement (20) en direction de l'obstacle est la composante de vitesse projetée sur une ligne de liaison entre les moyens de détection (10) et l'obstacle.

6. Procédé selon l'une des revendications 1 à 5,
**caractérisé en ce que** les moyens de détection (10) se composent d'un capteur d'ultrasons (11) et/ou d'un capteur radar et/ou d'un dispositif de balayage à laser et/ou d'une caméra à temps de vol et/ou de capteurs inductifs.

7. Procédé selon l'une des revendications 1 à 6,
**caractérisé en ce que** le chariot de manutention (1) est un chariot élévateur à mât rétractable (14) et les moyens de détection (10) détectent la zone qui fait face aux moyens supports de charge (5), notamment la zone devant et au-dessus des moyens supports de charge (5).

8. Procédé selon la revendication 7, **caractérisé en ce que** les moyens de détection (10) sont disposés au niveau d'un ou des deux bras de roue (2) du chariot élévateur à mât rétractable (14).

9. Procédé selon l'une des revendications 1 à 6,
**caractérisé en ce que** les moyens de détection (10) détectent une zone proche du sol.

10. Procédé selon la revendication 9, **caractérisé en ce que** le chariot de manutention possède des moyens supports de charge (5) guidés en mobilité en hauteur au niveau d'un mât de levage (3) et un basculement dans le mode spécial (24) n'est effectué par la commande que lorsqu'une position des moyens supports de charge (5) dans la zone de détection proche du sol des moyens de détection (10) est constatée par des moyens de détection de la hauteur de levage, notamment un capteur de hauteur de levage, de la commande.
